# EUROPEAN PATENT APPLICATION

(11) **EP 1 757 188 A1**
(43) Date of publication of application: **28.02.2007**
(21) Application number: 05737218.7
(22) Date of filing: 02.05.2005
(51) Int. Cl.: A21D 15/02, A23G 3/00

(54) **METHOD OF FREEZE STORING BAKED FOOD AND APPARATUS THEREFOR**

(30) Priority: 07.05.2004 JP 2004139128
(71) Applicant: Mayekawa Mfg. Co., Ltd., Tokyo 135-0046 (JP)
(72) Inventor: KOUNO, Shinji, c/o MAYEKAWA MFG.CO., LTD, Tokyo 135-0046 (JP); ISHIKURA, Kou, c/o MAYEKAWA MFG.CO., LTD, Tokyo 135-0046 (JP); SHINOZAKI, Satoshi, c/o MAYEKAWA MFG.CO., LTD, Tokyo 135-0046 (JP)
(74) Representative: Strehl Schübel-Hopf & Partner
(86) International application number: PCT/JP2005/008297
(87) International publication number: WO 2005/107480

(57) **Abstract**

A method of freeze-storing baked foods that retains excellent condition of crust (surface layer of bread), avoiding any peeling, and that retains excellent sensory condition, attaining long-term frozen storage. There is provided a method of freeze storing baked foods, comprising carrying out frozen storage of baked foods , including baked bread and baked confectionery, in a humidified atmosphere, **characterized in that** baked foods are cooled to 30 to 35°C in terms of core temperature, and subjected to a high-humidity cooling process conducted in an atmosphere wherein even upon receiving of high-temperature baked foods after baking, 20 to 28°C and ≧ 65%RH high humidity condition can be maintained, and further subjected to a frozen storage process wherein the baked foods are freeze stored at low temperature of ≦freezing temperature.

## Description

### Technical Field

The present invention relates to a method and apparatus for freeze-storing baked food such as baked bread and confectionary in a humidified atmosphere.

### Background Art

In order to reduce the cost of making and distributing bread, distributors and bakeries recently adopted a method to freeze-store baked bread in storage of low temperature by introducing cooling air and cook the frozen bread for thawing in order to sell the bread which has been restored in a fresh baked state.

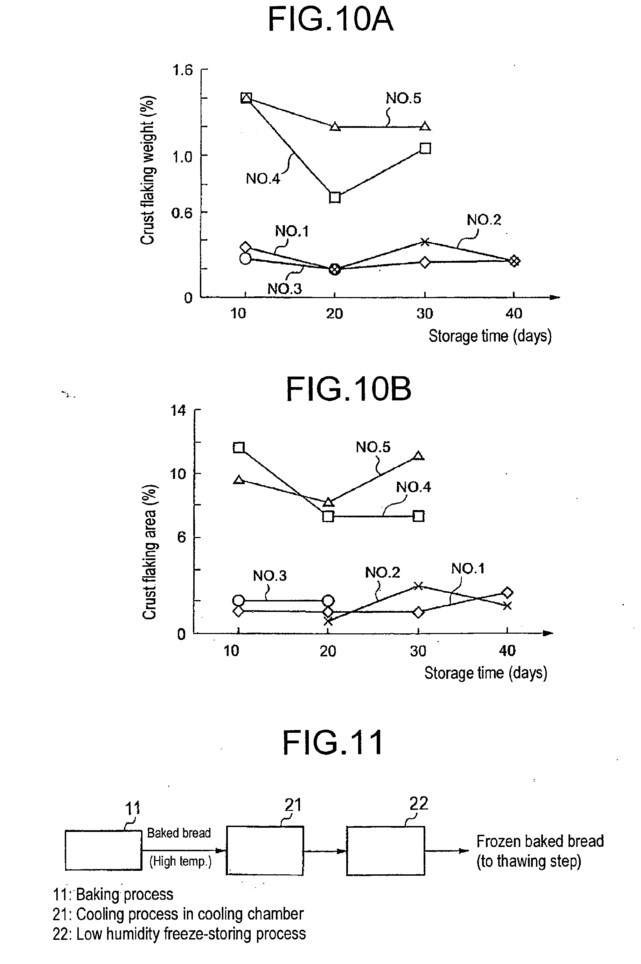

Conventionally, baked bread is stored frozen in the manner shown in the block diagram of FIG. 11. In FIG.11, bread is baked in a baking process 11, and the baked bread whose surface temperature is 85°C and above is cooled to make the surface temperature approximately 1 to 3°C in a cooling chamber whose temperature is maintained at -5°C and below. In a freeze-storing process 22, the cooled bread is frozen at about -20°C and 50 to 70%RH and prepared for the storing.

Another related art discloses a method for freeze-storing bread in which bread is carried in on a conveyor through a cooling chamber from an entrance to an exit and through a freezing chamber from an entrance to an exit. The conveyor carries bread thereon at a constant speed through the cooling chamber and freezing chamber in which bread is cooled and frozen. According to this method, the bread is cooled in the cooling chamber in which humidified air being premixed with spray water is supplied to the exit side and freeze-stored in the freezing chamber in which temperature is maintained at approximately -20°C to be ready for the shipment.

Patent literature 1 (JP11-346644A) proposes another method for freeze-storing baked bread and confectionery.
According to Patent literature 1, fresh cakes are quickly frozen to bring its core temperature 0°C and below, being stored at - 18°C and below and high humidity, and being thawed in a cool room of 0°C±2°C and 50 to 70%RH. Cakes include sponge cakes and bread which is made from the dough containing more than 40% soluble sugar in weight ratio of solid ingredients.

Patent Literature 1:JP11-346644A

### Disclosure of Invention

### Problems to be solved

A conventional freeze-storing method shown in FIG.11 comprises a cooling process 21 for preliminarily cooling baked bread of high temperature in a cooling chamber of approximately below -5°C after a baking process 11, and a freeze-storing process 22 for freeze-storing the baked bread in a freezing chamber of approximately -20°C and 50 to 70%RH. According to the inventors' test result, if the freezing process was performed for longer than a predetermined period, the baked bread processed by a conventional freeze-storing method showed crust staling and flaking, resulting in a weight decrease, and good texture and its commercial value are lost.

When water contained in the humidified air evaporates taking evaporative latent heat from the surrounding, the ambient temperature decreases at the exit side of the cooling chamber, causing a temperature difference between the entrance side and exit side, and a drop in relative humidity in the cooling chamber. This results in quality deterioration of the baked bread.

Patent literature 1 (JP11-346644A) relates to a freeze-storing method in which fresh confectionery including baked bread made from the dough containing prescribed amount of soluble sugar is rapidly frozen thereby to make the core temperature 0°C and below, and freeze-stored in the atmosphere of -18°C and below and high humidity. This literature does not disclose a method to freeze-stored baked bread for a long period of time, retaining excellent quality of the crust (surface layer of bread) and good sensory condition and preventing crust flaking.

Therefore, in view of the problems of the related art, the objects of the present invention is to retain excellent crust quality of baked food and also to prevent crust flaking.
Another object of the present invention is to provide a freeze-storing method of baked food in which the quality and sensory condition of fresh baked food is maintained even after a long period of freeze-storing.

To achieve the objects of the present invention, a method for freeze-storing baked food such as baked bread and confectionary in a humidified atmosphere, comprising the steps of:
cooling the baked food unattended in an atmosphere of high humidity; and
freeze-storing the baked food below the freezing point.
In the description, high humidity means that the relative humidity (RH) is 65% and above or in the case of water-spraying the crust of baked food, 45%RH and above.

It is preferable that the cooling step has the steps of pre-mixing air of room temperature with warmed water spray and introducing the pre-mixed air into a cooling space of high humidity. The temperature of the water spray is higher than that of the premixed air.
It is further preferable that the premixed air is introduced to the exit side of the cooling space of high humidity and the temperature of the atmosphere of the exit side inside the cooling space is controlled to be the room temperature which is approximately the same as that of the entrance side.

It is also preferable that the cooling step is performed to cool the baked food making the core temperature 30°C to 35°C, and the atmosphere of the cooling space is maintained highly humid at 20°C to 28°C and 65%RH and above (45%RH and above in the case of water-spraying the crust) even when the pre-mixed air is introduced therein.
In the description, any number relating to humidity refers to relative humidity.
In freeze-storing baked food, the most important thing is to keep the constant humidity of the core (crumb) of baked food. Therefore, it is necessary to cool the baked food to bring the crumb temperature 30 to 35°C by maintaining the temperature and humidity in the cooling atmosphere as above described.

In the above conventional method, to the exit side of the cooling chamber is supplied the air humidified by spraying cold water in the air of room temperature. When water contained in the humidified air evaporates taking evaporative latent heat from the surrounding, the ambient temperature decreases at the exit side of the cooling chamber, causing a temperature difference between the entrance side and exit side of the cooling chamber, causing a drop in absolute humidity inside the chamber. This results in deterioration in quality of the baked bread.
With the above configuration of the present invention, this problem of the prior art is solved and freeze-storing of baked food becomes possible maintaining excellent texture, flavor, softness and others.

In the present invention, when the humidity is between 45%RH and 60%RH, water is sprayed on the surface of the baked bread before the cooling step. By spraying water, only the water from the surface of baked food evaporates, preventing the water evaporation from the inside of baked food, and keeping the appropriate moisture inside even when the surrounding is at mid-humidity, i.e.45 to 60%RH.
Baked food of the present invention refers to fully baked or half baked bread. In both bread, the crust is fully baked, preventing water from being absorbed inside when spraying water on the crumb.
The baked food is freeze-stored in the atmosphere of -30°C to -40°C to make the core temperature -10°C and below.

The freeze-storing step preferably comprises a first freezing step for freezing the baked food in an atmosphere of the freezing point and below and high humidity after the cooling step.
The baked food may be cooled in a cooling chamber of high humidity in the first cooling step, plainly wrapped, and freeze-stored in a freezing box of the freezing point and below and high humidity in the first freezing step.
In the description, "plain wrapping" means wrapping baked food plainly enough to prevent water evaporation from the surface layer between the cooling chamber and freezing chamber.

It is preferable that the first cooling step is carried out in the cooling chamber for less than 60 minutes and at 90%RH and above thus to bring the surface temperature of the baked food near 30°C.
It is also possible to cool freshly baked food slowly in the high-humidity atmosphere to bring the crust temperature to room temperature and then to freeze the cooled bread rapidly.
In the description, "cooling slowly" means to cool the baked food at a slow speed so that the temperature difference from the entrance to the exit of the cooling chamber is small (within ±5°C). The cooling period of the baked food traveling from the entrance to the exit of the cooling chamber may be 35 to 80 minutes.

According to the present invention, the freshly baked food is cooled in the cooling chamber of 90%RH and above thus to bring the surface temperature of the baked food near 30°C. Freshly-baked bread is laid in the cooling chamber or traveled in the cooling chamber of high humidity, thereby lowering its temperature near room temperature with enough moisture maintained in the crust. Thus, baked food can be processed, maintaining excellent crust condition and preventing crust flaking.

By plainly wrapping the baked food which comes out of the cooling chamber, water evaporation from the crust is prevented. Further, by storing the baked food in the freezing chamber of the freezing point and below and preferably 80%RH and above, the baked bread can be cooled to the freezing point with enough moisture in the crust, thereby achieving a freeze-storing of baked food maintaining excellent quality.

It is also preferable to carry out the first freezing step in high humidity, and a second freeze step for a longer period of time than the first freezing step. The second freezing step is carried out in the atmosphere of low temperature which is the freezing point and below, and low humidity which is lower than that of the high humidity freeze storing.
In this description, low humidity means 50%RH and below.
In many cases, baked food is freeze-stored for a short period of time and shipped to stores. With the above structure, by performing the high-humidity freeze-storing even for a short period of time, baked food can be freeze-stored holding enough humidity in the crust and shipped to stores without quality deterioration.

An apparatus of the present invention for freeze-storing baked food such as baked bread and confectionary in a humidified atmosphere comprises;
a cooling chamber being kept at room temperature and high humidity inside;
a pre-mixing device for premixing air of room temperature with warmed water spray and introducing the premixed air in the cooling chamber;
a freezing chamber being kept at the freezing point and below of the baked foods inside; and
at least one conveyor being arranged movable in and out of the cooling chamber and the freezing chamber for transferring the baked food placed thereon.

The apparatus of the present invention has a pre-mixing device for premixing air of room temperature with warmed water spray and introducing the premixed air in the cooling chamber. By introducing the premixed air in the cooling chamber, temperature drop is prevented as the water contained in the premixed air evaporates taking evaporative latent heat from the surrounding.
It is further preferable that an inlet of the premixed air is connected to the exit side of the cooling chamber, and ambient temperature on the exit side of the cooling chamber is controlled to be near the room temperature which is about the same as the ambient temperature on the entrance side of the cooling chamber.
Thus, the cooling chamber is kept at approximately the same temperature and high humidity from the entrance to the exit.

### Effects of the invention

According to the present invention, fresh baked food is cooled in a humidified atmosphere, and freeze-stored at temperature lower than the freezing point.
Baked food is cooled to make the core temperature 30°C to 35°C in the atmosphere in which the cooling space is maintained highly humid at 20°C to 28°C and 65%RH and above (45%RH and above in the case of water-spraying the crust) even when the pre-mixed air is introduced therein. As a result, baked food can be freeze-stored maintaining excellent texture, flavor, softness without deterioration in quality.

It is preferable that the cooling step has the steps of:
pre-mixing air of room temperature with warmed water spray; and
introducing the pre-mixed air into a cooling space of high humidity,
wherein the temperature of the water spray is higher than that of the pre-mixed air.
It is also preferable that the cooling step further has the steps of:
introducing the pre-mixed air to the exit side of the cooling space of high humidity; and
controlling the temperature of the atmosphere of the exit side inside the cooling space to be the room temperature which is approximately the same as that of the entrance side.
Therefore, the temperature is kept constant and at room temperature from the entrance to the exit of the cooling chamber.
With this, it is also possible to maintain the core temperature of baked food constant during the cooling step and the quality of baked food is sustained.

In the present invention, when the humidity is between 45% and 60%, water is sprayed on the surface of the baked bread before the cooling step. By spraying water, only the water from the surface of baked food evaporates, preventing the water evaporation from the inside of baked food, and keeping the appropriate moisture inside even when the surrounding is at mid-humidity, i.e. 45 to 60%RH.
Baked food of the present invention refers to fully baked or half baked bread. In both bread, the crust is fully baked, preventing water from being absorbed inside when spraying water on the crumb.
The baked food is freeze-stored in the atmosphere of -30°C to -40°C to make the crumb temperature -10°C and below.

Further, freshly-baked food of high temperature is cooled unattended in the atmosphere of high humidity such as inside the cooling chamber of high humidity in the cooling chamber, thereby lowering its temperature near room temperature, holding enough moisture in the crust of the baked food.
By plainly wrapping the baked food after the cooling step, water evaporation from the crust is prevented. Further, by storing the baked food in the freezing chamber of the freezing point and below, the baked food can be cooled to the freezing point with enough moisture in the crust, thereby achieving a freeze-storing of baked food maintaining excellent quality.

Accordingly, freshly-baked food can be freeze-stored keeping enough moisture in the crust from post-baking to the freeze-storing step. Thus, the baked food maintains enough moisture in the crust from baking to freeze-storing, thereby maintaining good crust quality and preventing crust flaking , and further freeze-storing for long period maintaining good sensory condition can be achieved.

### Brief Description of Drawings

[FIG.1] Block diagram illustrating a treatment line of the first embodiment of the present invention.
[FIG.2] Table showing a test condition of the first embodiment.
[FIG.3] Tableshowingcooling/freezingtemperature, etc of the first embodiment.
[FIG.4] Graph showing the transition of cooling/freezing temperature in the case of test No.1 and 4 of the first embodiment.
[FIG.5] Graph showing the transition of cooling/freezing temperature in the case of test No.5 of the first embodiment.
[FIG.6] Graph showing the transition of cooling/freezing temperature in the case of test No.6 of the first embodiment.
[FIG.7] Table showing a test result of the first embodiment.
[FIG.8] Block diagram illustrating a freeze-storing system of baked bread regarding the second embodiment of the present invention.
[FIG.9] Table showing a comparison of evaluation test results of freeze-stored baked bread.
[FIG.10] Graphs illustrating test results regarding crust flaking of freeze-stored baked bread.
[FIG.11] Block diagram illustrating a conventional freeze-storing system corresponding to FIG.8.

### Best Mode for Carrying Out the Invention

Preferred embodiments of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

### First Embodiment

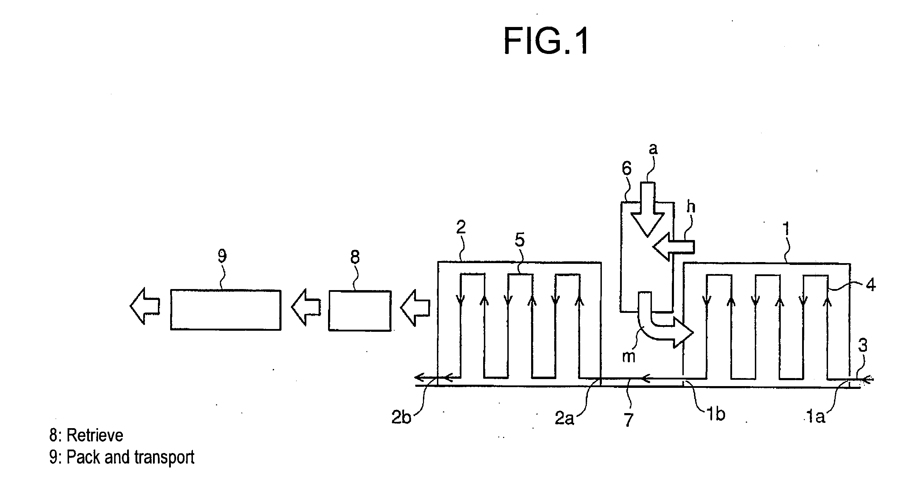

FIG.1 is a block diagram illustrating a treatment line of the first embodiment of the present invention in the case of cooling and freezing baked bread including half-baked bread and fully baked bread. A cooling chamber 1 for cooling food in high humidity is configured to be sealed hermetically so that desired temperature and humidity are maintained inside. A freezing chamber can be also sealed hermetically so that temperature inside is maintained at freezing temperature and below. Conveyor 3 transfers baked food placed thereon through the cooling chamber 1 and freezing chamber 2.

The conveyor 3 is formed of vertical conveyors 4, 5 and horizontal conveyor 7. The conveyor 3 is in the form of a vertical conveyor 4,5 inside the cooling chamber 1 and freezing chamber 3 being configured to move in the vertical direction and its speed can be adjusted so that the baked bread can travel on the conveyor in the chambers 1 , 2 for a desired period of time.
A premixed air chamber 6 located at the exit of the cooling chamber 1 takes in the air a and produce premixed air *m* by spraying warmed water *h* to the air *a*. The premixed air *m* is sprayed in the atmosphere on the exit side of the cooling chamber 1. In this case, the temperature of the sprayed water *h* is preferably higher than that of the premixed air.

In the cooling chamber 1, temperature of the atmosphere on the exit side is maintained by introducing the premixed air *m* of high humidity and high temperature from the premixed air chamber 6. When water contained in the premixed air *m* evaporates taking evaporative latent heat from the surrounding, the premixed air of high humidity and high temperature provides heat to maintain the atmospheric temperature on the exit side of the cooling chamber 1. Therefore, the cooling chamber 1 can be maintained approximately at room temperature and high humidity on both the entrance and exit sides.
With this structure of the first embodiment, bread which is half-baked or fully baked in a baking process not shown in the drawings (hereinafter called baked bread) is placed on the conveyor 3 and enters the cooling chamber 1 from the entrance 1a. The baked bread is carried through the cooling chamber 1 on the vertical conveyor 4 at prescribed speed for a desired period of time and is cooled in the cooing chamber 1.

The baked bread comes out from the exit 1b of the cooling chamber 1 and enters the freezing chamber 2 from the entrance 2a on the horizontal conveyor 7. The baked bread is carried through the freezing chamber 2 on the vertical conveyor 5 to move in the vertical direction inside the freezing chamber 2, thereby freeze-storing the baked bread to the temperature below the freezing point, i.e. -30°C to -40°C.
The baked bread coming out from the exit 2b of the freezing chamber 2 is packed and shipped to stores such as convenient stores.

According to the first embodiment, the constant temperature and high humidity inside the cooling chamber 1 is maintained by introducing the premixed air *m* of high humidity and high temperature. The premixed air provides heat and humidity to maintain the constant temperature and high humidity inside the chamber 1 as the water contained in the premixed air *m* evaporates taking evaporative latent heat from the surrounding. Therefore, the cooling chamber 1 is maintained approximately at room temperature and high humidity on both the entrance and exit sides and the baked bread can be cooled, lowering the crumb temperature to 30 to 50°C and maintaining high humidity.
The temperature of the freezing chamber 2 is kept below the freezing point of foods such as baked bread, e.g. -30°C to -40°C so that even large bread can be frozen to below the freezing point.

### Second Embodiment

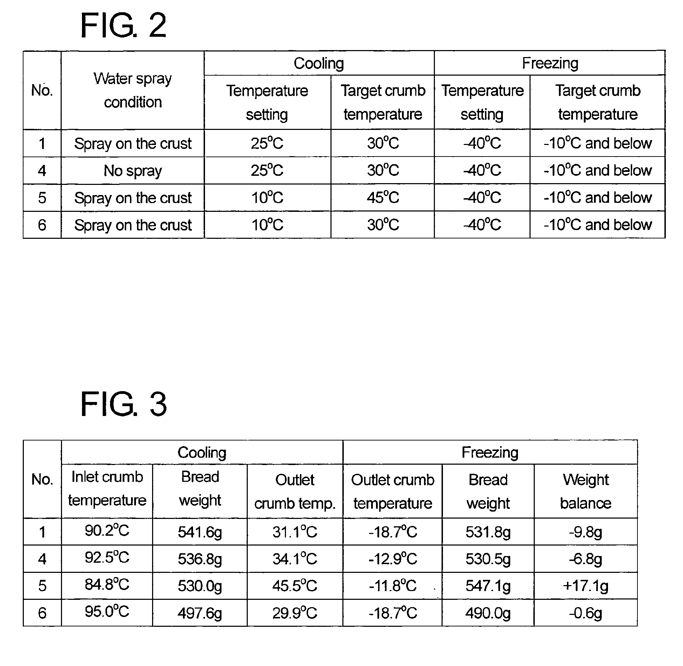

The result of cooling and freezing tests is described below. Half-baked Zopf (braided bread) (500g/unit), i.e. partially baked, was tested under various conditions.
Zopf is rich bread made from flour 100, salt 2, yeast 0.8, water 62, fat 5, egg 5 and others in weight ratio. After mixing ingredients and fermenting the dough, bread was baked for the primary baking. The primary-baked bread was divided into one for spraying water and the other for no spraying on the crust, and cooled and frozen under the conditions shown in FIG.2. The bread was baked in an oven at a store for the final baking (175°C for 11 min. → 190°C for 5 min) and evaluated.

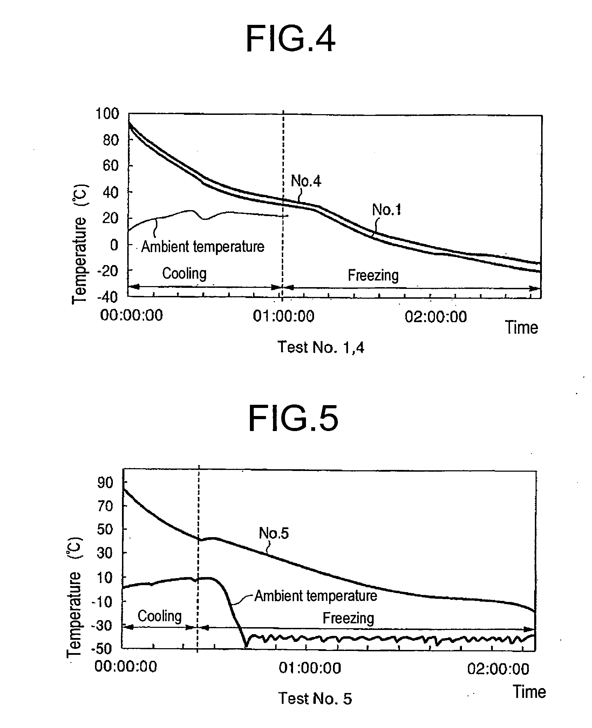

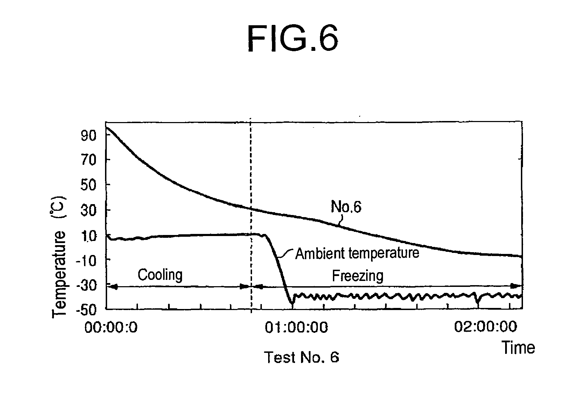

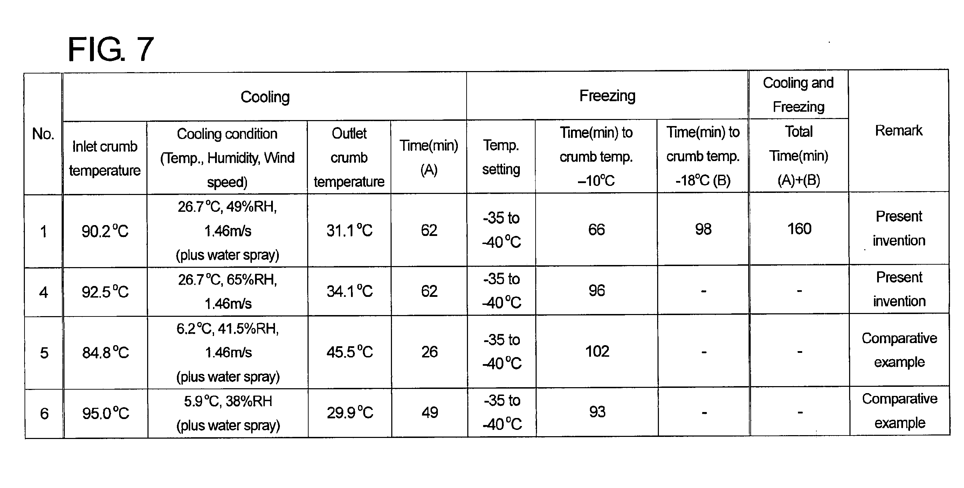

The result of the tests is shown in FIG.3 to FIG.7. In the sensory test, Test No.1 showed the best result and Test No. 4 showed the second best result showing water spots partially. The bread of test No.5 came out too soft and loose and its color was bad. The bread of Test No.6 had thick crust and the quality was poor.
As this sensory test shows, good result was obtained from Test No.1 and No.4 in which during the cooling process the temperature and humidity was kept high at 26 to 27°C and 49%RH plus water spray in Test No.1 and 65%RH in Test No.4 and cooling time was long, 62 minutes, and after the cooling process the crumb temperature was kept at 30 to 35°C

This test was carried out using half-baked bread. In the case of testing fully baked bread, the fully baked bread whose crust was sprayed with water did not show crust flaking maintaining good quality as the crust was hard and kept the water out preventing deterioration.

### Third Embodiment

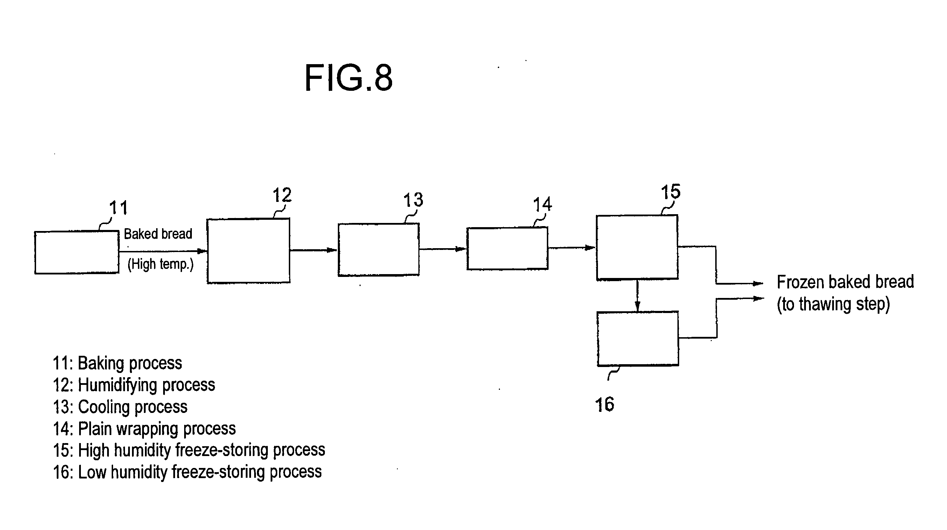

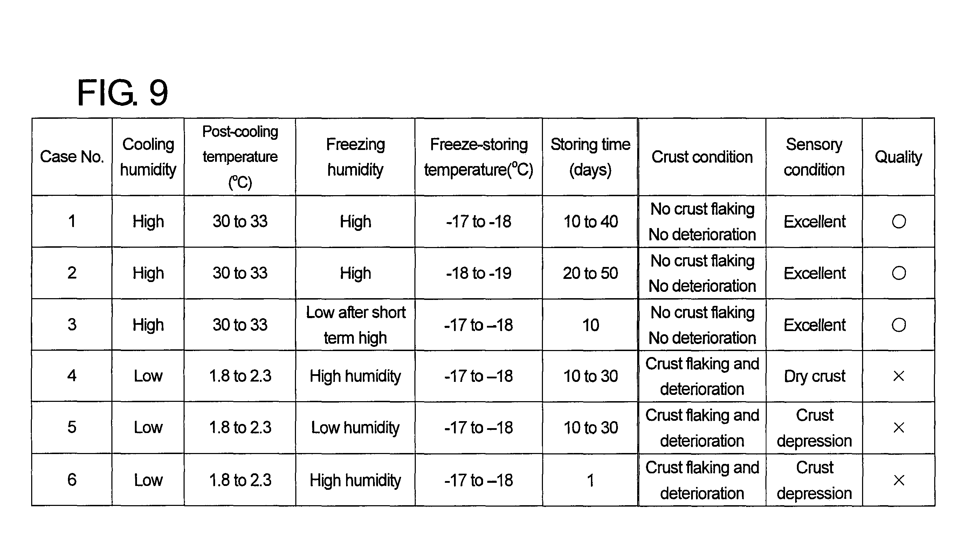

The third embodiment of the present invention is described below. FIG. 8 is a block diagram illustrating a freeze-storing system of baked bread regarding the second embodiment of the present invention. FIG.9 is a table showing the comparison of evaluation test results of freeze-storing baked bread. FIG.10A and FIG.10B are graphs illustrating test results regarding crust flaking of freeze-stored baked bread.

In FIG.8 showing the second embodiment, bread baked in the baking process 11 having a crust temperature 88 to 96°C is stored in the cooling chamber in which a humidifying process 12 is performed.
In the humidifying process 12, the baked bread of high temperature is highly humidified inside the cooling chamber approximately at 34°C and above 95%RH, and in a cooling process 13 the baked bread is cooled inside the chamber of high temperature and high humidity for about 60 minutes for cooling thus to lower the crust temperature to about 30 to 33°C.
In the humidifying process 12 and the cooling process 13, freshly-baked bread of high temperature is cooled in the cooling chamber, thereby lowering its temperature near room temperature, holding enough moisture in the crust of the baked bread.

After the cooling process, the baked bread is plainly wrapped and carried into the freezing chamber. By plainly wrapping the baked bread coming out of the cooling chamber, the water evaporation from the crust is prevented when carrying the baked bread from the cooling chamber to the freezing chamber.
The freezing chamber is controlled such the temperature inside is -17 to -20°C and the relative humidity is 50 to 70%. Inside the freezing chamber is provided a freezing box of high humidity being controlled such that the temperature is -17 to -19°C and the relative humidity is 80 to 85%RH. The baked bread is stored in the freezing box during a high-humidity freeze-storing process 15.

By performing the high-humidity freeze-storing process 15, the baked bread is freeze-stored holding enough moisture in the crust, thereby retaining good quality.
It is also possible to cool freshly baked bread slowly in the high-humidity atmosphere to bring the crust temperature to room temperature and then to freeze the cooled bread rapidly.

According to the third embodiment, the humidifying process 12 and the cooling process 13 are performed on freshly baked bread so that its temperature is lowered near room temperature maintaining enough moisture in the crust, and the plain wrapping process is performed for preventing water evaporation from the crust. Then the high-humidity freeze-storing process 15 is performed by storing the plainly wrapped bread in the freezing box in which the temperature is kept below the freezing point (-17°C to -20°C) and the humidity is kept high at 80 to 85%RH. Thus, the baked bread maintains enough moisture in the crust from baking to freeze-storing, thereby maintaining good crust quality and preventing crust flaking, and further freeze-storing for long period maintaining good sensory condition can be achieved.

### Fourth Embodiment

According to the fourth embodiment of the present invention, the baked bread is sent to the high-humidity freeze-storing process 15 and then to the freeze-storing process 6. In the high-humidity freeze-storing process 15, the baked bread is freeze-stored for a short period of time, e.g. two days in the freezing box of low temperature and high humidity inside the freezing chamber of low temperature and low humidity. Next in low-humidity freeze storing process 16, the baked bread is further freeze-stored for longer period of time than the high-humidity freeze-storing process 15, in which the temperature is kept below the freezing point of bread and the relative humidity is 50 to 70%RH.
In many cases, baked bread is freeze-stored for a short period of time and shipped to stores. However, according to this embodiment, by performing the high-humidity freeze-storing 15 even for a short period of time, baked bread can be freeze-storedholding enough humidity in the crust and shipped to stores without quality deterioration.

FIG.9 shows a comparison of evaluation test results of freeze-stored baked bread and non freeze-stored baked bread. FIG.9 also shows freezing conditions, sensory evaluation.
Half-baked Zopf (braided bread) (500g/unit) which is partially baked bread was tested under various conditions.
The bread used for the test was baguette made from flour 100, salt 1.9, yeast 1.0, water 63.3 in weight ratio. After mixing ingredients well to make the dough, the dough is primary-fermented for 2 hours at 28°C, punched down for pushing the air out, final-fermented for 1 hour at 30-35°C, and baked in the oven for 20 to 25 minutes at 230°C.

In FIG.9, Case No.1 and Case No.2 is baked bread which is freeze-stored according to the first to third embodiment of the present invention. Case No.3 is baked bread which is freeze-stored according to the fourth embodiment of the present invention. Case Nos.4-6 is baked bread which is freeze-stored according to a comparative example.

As seen from Fig . 9 , baked bread of Case Nos. 1 and 2 was processed in the humidification process 12 and the cooling process 13 inside the cooling chamber and the high-humidity freezing process 15 inside the freezing box. Baked bread of Case No.3 was processed in the high-humidity freeze-storing process 15 inside the freezing box and the low-humidity freeze-storing process 16. Bread of Case Nos.1 and 2 showed no defect such as crust flaking and retained great shape and excellent taste.
On the other hand, baked bread of case Nos.4-6 showing the comparative examples, which was not processed in the humidifying process 12 or cooling process 13 showed defects in shape and taste after freeze-storing.

FIG.10A and FIG.10B are graphs illustrating test results regarding crust flaking of freeze-stored baked bread of FIG. 9. FIG.10A shows a relation between a storing period and crust flaking percentage in weight and FIG.10B shows a relation between a storing period and crust flaking percentage in area. As obvious from FIG.10A and FIG.10B, crust flaking in Case Nos.1-3 is suppressed to 1/3 of the comparative examples of Case Nos.4-5.

### Industrial Applicability

The present invention provides a method and apparatus for freeze-storing baked foods including baked bread in which the foods can be freeze-stored for a long time, maintaining its good crust condition without crust flaking, and good sensory condition.

## Claims

1. A method for freeze-storing baked food such as baked bread and confectionery in a humidified atmosphere, comprising the steps of:
cooling the baked food unattended in a cooling space of high humidity; and
freeze-storing the baked food at its freezing point and below.

2. A method for freeze-storing baked food according to claim 1, said cooling step having the steps of:
pre-mixing air of room temperature with warmed water spray; and
introducing the pre-mixed air into the cooling space of high humidity,
wherein the temperature of the water spray is higher than that of the premixed air.

3. A method for freeze-storing baked food according to claim 2, said cooling step further having the steps of:
introducing the premixed air to the exit side of the cooling space of high humidity; and
controlling the temperature of the atmosphere of the exit side inside the cooling space to be the room temperature which is approximately the same as that of the entrance side.

4. A method for freeze-storing baked food according to claim 2, wherein the cooling step is performed to cool the baked food making crumb temperature 30 to 35°C, and the atmosphere of the cooling space is maintained highly humid at 20 to 28°C and 65%RH and above, even when the pre-mixed air is introduced therein.

5. A method for freeze-storing baked food according to claim 1, wherein when the humidity is between 45%RH and 60%RH, water is sprayed on the surface of the baked bread before the cooling step.

6. A method for freeze-storing baked food according to claim 2, wherein the baked food includes half-baked bread and fully baked bread.

7. A method for freeze-storing baked food according to claim 5, wherein the baked food includes fully baked bread.

8. A method for freeze-storing baked food according to claim 1, wherein the baked food is freeze-stored in the atmosphere of -30°C to -40°C to make the core temperature -10°C and below.

9. A method for freeze-storing baked food according to claim 1, said freeze-storing step having;
a first freezing step for freezing the baked food in the atmosphere of the freezing point and below and high humidity after the cooling step.

10. A method for freeze-storing baked food according to claim 9, said freeze-storing step further having;
a second freezing step for freezing the baked food in the atmosphere of the freezing point and below and humidity lower than the first freezing step, the second freezing step being performed for a longer period than the first freezing step.

11. A method for freeze-storing baked food according to claim 9 or 10, wherein the baked food is cooled in a cooling chamber of high humidity in the first cooling step, plainly wrapped, and freeze-stored in a freezing box of the freezing point and below and high humidity in the first freezing step.

12. A method for freeze-storing baked food according to the claim 9, wherein the first cooling step is carried out by cooling the fresh baked food slowly in the atmosphere of high humidity to bring the crust temperature to a room temperature, and subsequently freezing the same rapidly.

13. A method for freeze-storing baked food according to the claim 11, wherein the first cooling step is carried out in the cooling chamber for less than 60 minutes in which the relative humidity is kept above 90%RH thus to bring the surface temperature of the baked food near 30°C.

14. An apparatus for freeze-storing baked food such as baked bread and confectionary in a humidified atmosphere; the apparatus comprising;
a cooling chamber being kept at room temperature and high humidity inside;
a pre-mixing device for pre-mixing air of room temperature with warmed water spray and introducing the premixed air in the cooling chamber;
a freezing chamber being kept at the freezing point of the baked bread and below; and
at least one conveyor being arranged movable in and out of the cooling chamber and the freezing chamber for transferring the baked food placed thereon.

15. An apparatus for freeze-storing baked food according to claim 14, wherein an inlet of the premixed air is connected to the exit side of the cooling chamber, and ambient temperature on the exit side of the cooling chamber is controlled to be near the room temperature which is about the same as the ambient temperature on the entrance side of the cooling chamber.

## Amended claims

### Amended claims under Art. 19.1 PCT

1. (Amended) A method for freeze-storing baked food such as baked bread and confectionary in a humidified atmosphere, comprising:
a cooling step for cooling the baked food unattended in an atmosphere of high humidity or in an atmosphere of medium humidity by spraying water on the surface layer of the baked food beforehand;
a first freezing step for freeze-storing the baked food in an atmosphere of the freezing point and below and high humidity after the cooling step; and
a second freezing step for freeze-storing the baked food in an atmosphere of the freezing point and below and humidity lower than the first freezing step, the second freezing step being performed for a longer period than the first freezing step.

2. A method for freeze-storing baked food according to claim 1, said cooling step having the steps of:
pre-mixing air of room temperature with warmed water spray; and
introducing the pre-mixed air into a cooling space of high humidity,
wherein the temperature of the water spray is higher than that of the premixed air.

3. A method for freeze-storing baked food according to claim 2, said cooling step further having the steps of:
introducing the premixed air to the exit side of the cooling space of high humidity; and
controlling the temperature of the atmosphere of the exit side inside the cooling space to be the room temperature which is approximately the same as that of the entrance side.

4. A method for freeze-storing baked food according to claim 2, wherein the cooling step is performed to cool the baked food making the crumb temperature 30 to 35°C, and the atmosphere of the cooling space is maintained highly humid at 20 to 28°C and 65%RH and above, even when the pre-mixed air is introduced therein.

5. (Amended) A method for freeze-storing baked food according to claim 1, wherein when the relative humidity during the cooling step is between 45% and 60%, water is sprayed on the surface of the baked food before the cooling step.

6. (Amended) A method for freeze-storing baked food according to claim 1, wherein the baked food includes half-baked bread and fully baked bread, and
said cooling step having the steps of:
pre-mixing air of room temperature with warmed water spray; and
introducing the pre-mixed air into a cooling space of high humidity,
wherein the temperature of the water spray is higher than that of the premixed air.

7. (Amended) A method for freeze-storing baked food according to claim 1, wherein the baked food includes fully baked bread, and wherein when the relative humidity during the cooling step is between 45% and 60%, water is sprayed on the surface of the baked food before the cooling step.

8. A method for freeze-storing baked food according to claim 1, wherein the baked food is freeze-stored in the atmosphere of -30°C to -40°C to make the core temperature -10°C and below.

9. Withdrawn

10. Withdrawn

11. (Amended) A method for freeze-storing baked food according to claim 1, wherein the baked food is cooled in a cooling chamber of high humidity in the cooling step, and plainly wrapped, and freeze-stored in a freezing box of below the freezing point and high humidity in the first freezing step.

12. (Amended) A method for freeze-storing baked food according to the claim 9, wherein the cooling step is carried out by cooling the fresh baked food in the atmosphere of high humidity in which the temperature difference from the entrance to the exit of the cooling chamber is within ±5°C to thereby bring the crust temperature to a room temperature, and subsequently freezing the same rapidly.

13. A method for freeze-storing baked food according to the claim 11, wherein the first cooling step is carried out in the cooling chamber for less than 60 minutes in which the relative humidity is kept above 90%RH thus to bring the surface temperature of the baked food near 30°C.

14. (Amended) An apparatus for freeze-storing baked food such as baked bread and confectionery in an atmosphere of high humidity; the apparatus comprising;
a cooling chamber being kept at room temperature and high humidity inside;
a pre-mixing device for premixing air of room temperature with warmed water spray and introducing the premixed air in the cooling chamber;
a freezing chamber being kept below the freezing point of the baked foods and below inside; and
at least one conveyor being arranged movable in and out of the cooling chamber and the freezing chamber for transferring the baked food placed thereon,
wherein the cooling chamber and freezing chamber are provided separately, and a high-humidity freezing step is performed in the freezing chamber for a longer period than high-humidity cooling in the cooling chamber.

15. An apparatus for freeze-storing baked food according to claim 14, wherein an inlet of the premixed air is connected to the exit side of the cooling chamber, and ambient temperature on the exit side of the cooling chamber is controlled to be near the room temperature which is about the same as the ambient temperature on the entrance side of the cooling chamber.

16. (New) An apparatus for freeze-storing baked food according to claim 14, wherein the cooling chamber and freezing chamber are provided separately;
wherein a high-humidity freezing step is performed in the freezing chamber for a longer period than high-humidity cooling in the cooling chamber; and
wherein the cooling chamber is at the freezing point and below and lower humidity than the cooling chamber.
